# EUROPÄISCHE PATENTSCHRIFT

(11) **EP 1 888 989 B1**
(45) Veröffentlichungstag und Bekanntmachung des Hinweises auf die Patenterteilung: **18.03.2015**
(21) Anmeldenummer: 06743139.5
(22) Anmeldetag: 09.06.2006
(51) Int. Cl.: F27B 3/18, F27D 3/10, F27D 3/00, C21C 5/52, C21C 5/46, B65G 11/16

(54) **SCHMELZ- ODER REDUKTIONSOFEN, INSBESONDERE ELEKTROLICHTBOGENOFEN, DER OFFEN, HALBOFFEN ODER GESCHLOSSEN AUSGEFÜHRT IST**
SMELTING OR REDUCTION FURNACE, IN PARTICULAR ELECTRIC ARC FURNACE WITH AN OPEN, SEMI-CLOSED OR CLOSED CONFIGURATION
FOUR A FUSION OU DE REDUCTION, EN PARTICULIER FOUR ELECTRIQUE A ARC, QUI PEUT ETRE OUVERT, A DEMI OUVERT OU FERME

(30) Priorität: 09.06.2005 DE 102005026627
(43) Veröffentlichungstag der Anmeldung: 20.02.2008
(73) Patentinhaber: SMS Siemag AG, 40237 Düsseldorf (DE)
(72) Erfinder: KUMMER, Karl-Heinz, 47249 Duisburg (DE); BORGWARDT, Dieter, 64286 Dorsten (DE)
(74) Vertreter: Klüppel, Walter
(86) Internationale Anmeldenummer: PCT/EP2006/005524
(87) Internationale Veröffentlichungsnummer: WO 2006/131384

(56) Entgegenhaltungen:
- DE-A1- 3 215 119
- PATENT ABSTRACTS OF JAPAN Bd. 002, Nr. 030 (M-010), 24. Februar 1978 (1978-02-24) -& JP 52 145965 A (SUMITOMO METAL IND LTD; others: 01), 5. Dezember 1977 (1977-12-05)

## Beschreibung

Die Erfindung betrifft einen Schmelz- oder Reduktionsofen, insbesondere einen Elektrolichtbogenofen, der offen, halboffen oder geschlossen ausgeführt ist, dem das Beschickungsgut in fester Form mittels Beschickungsrohren zugeführt wird, die ggfs. durch eine Abgashaube oder einen als Ofendeckel ausgebildeten Oberofen bis in den Ofenraum geführt sind.

Derzeit werden Beschickungsrohre eingesetzt, die aus zwei Rohren mit entsprechenden großen Durchmessern und dazwischen liegenden schraubenlinienförmigen Kühlrohren bestehen. Alleine die fertigungstechnisch aufwendige Herstellung solcher Schraubenlinien-Rohre ist wenig wirtschaftlich. Wesentlich bedeutender ist die Erfahrung, dass die Kühlrohre undicht werden und das Kühlwasser in den Ofen gelangen kann. Solche Undichtigkeiten werden durch den scharfkantigen Möller verursacht, wobei hoher Verschleiß entsteht und die Wasserleckagen unvermeidlich sind. Beim Eindringen von Wasser in den Ofenraum entsteht Explosionsgefahr.

Aus der DE 32 15 119 A1 ist bekannt, in Fällen, in denen die Beschickungsrohre der extremen Ofenhitze ausgesetzt sind, die Kühlprobleme zu vermindern und ein Beschickungsrohr von längerer Lebensdauer und größerer Betriebssicherheit zu schaffen. Dazu ist es bekannt, ein Beschickungsrohr vertikal in den Ofenraum abzusenken und nach dem Beschickungsvorgang wieder hochzuziehen. Das Beschickungsrohr besteht aus zwei teleskopartigen Rohrteilen. Das Einfüllen der Charge erfolgt in hochgezogener Stellung, bei der auch die untere Auslauföffnung verschlossen wird. Abgesenkt wird nur zur Beschickung selbst.

Die Absenkung erfolgt sehr schnell, um dem Beschickungsgut eine erhöhte Fallbeschleunigung zu erteilen. Auf diese Weise befindet sich das Beschickungsrohr die längste Zeit in einer geschützten Stellung, in der es nicht der unmittelbaren Ofenhitze ausgesetzt ist. Diese Gestaltung erfordert einen großen Aufwand an Investitionskosten, an Material, Steuerung und Elektrik, die über dem heißen Ofen in Bereichen anzuordnen sind, die wiederum eine Kühlung verlangen. Die JP 52-145965 A beschreibt ein Beschickungsrohr, dass eine Aussen- und eine Innenschicht umfasst und in dass Ofeninnere hineinragt. Innerhalb des Rohres ist eine verschleissfeste Schicht angeordnet, die aus dem Beschickungsrohr entziehbar und wieder einsetzbar ist.

Der Erfindung liegt die Aufgabe zugrunde, das Eindringen von Wasser in den Ofenbereich zu vermeiden, wenn möglich, gänzlich auszuschließen. Die gestellte Aufgabe wird erfindungsgemäß durch die Merkmalskombination des Anspruchs 1 gelöst. Dadurch ist unmöglich, dass eine Situation mit der Gefahr einer Explosion durch Eindringen von Kühlwasser in den Ofenraum entsteht. Außerdem wird an Schweißarbeit durch die bisherigen und jetzt entfallenden schraubenlinienförmigen Kühlrohre gespart. Die Standzeit solcher Beschickungsrohre hat sich als ausreichend und wirtschaftlich erwiesen.

Eine Weiterbildung sieht vor, dass der Werkstoff für das verschleissfeste Führungsinnenrohr aus Manganhartstahl oder einer Manganlegierung zur Vermeidung der Erhitzung durch Induktionsströme besteht.

Weiterhin wird vorgeschlagen, dass der Werkstoff für das hitzebeständige Außenschutzrohr aus hochwarmfestem Chromnickelstahl besteht. Erfindungsgemäss ist das verschleißfeste Führungsinnenrohr bei ca. 500 - 600 mm Außendurchmesser mit einem Luftspalt in das hitzebeständige Außenschutzrohr bei ca. 560 - 660 mm Außendurchmesser eingeschoben.

Dieser Luftspalt beträgt mindestens 10 mm und bildet eine weitere WärmeIsolation von außen nach innen, wodurch die Standzeit weiter erhöht wird.

In der Zeichnung ist ein Ausführungsbeispiel der Erfindung dargestellt, das nachstehend näher beschrieben wird.

Es zeigen:
- Fig. 1: einen Querschnitt durch den größten Teil einer Elektrolichtbogen-Ofenanlage und
- Fig. 2: einen axialen Längsschnitt durch das Mundstück für das Beschickungsrohr.

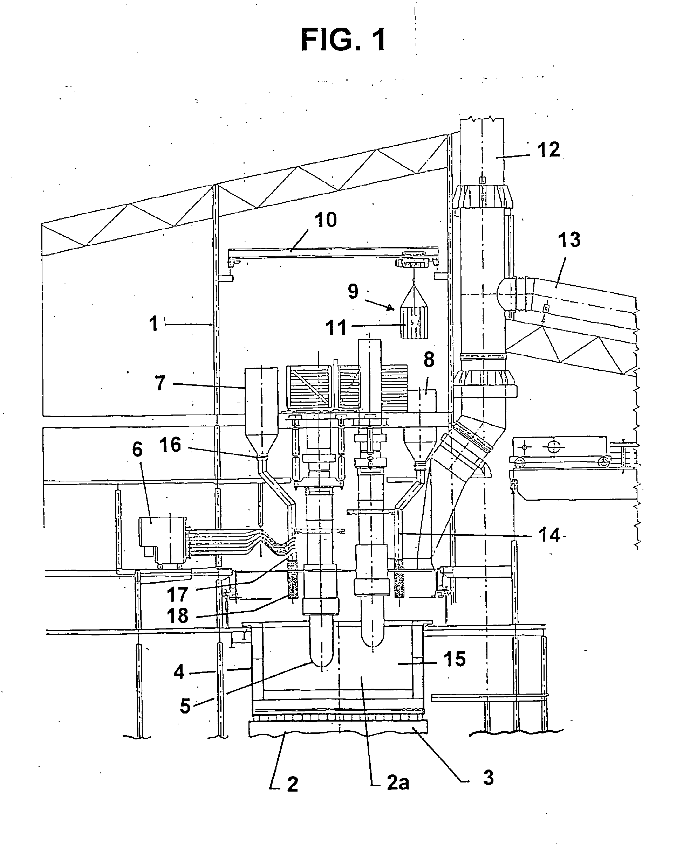

In einem Hallengerüst 1 (Fig. 1) ist ein Reduktionsofen 2, wie bspw. ein Elektrolichtbogenofen 2a angeordnet. Der Reduktionsofen 2 besteht aus einem Unterofen 3, dem eigentlichen Schmelzteil, und einem Oberofen 4. Der Reduktionsofen 2 kann in verschiedenen Bauarten offen, halboffen oder geschlossen ausgeführt sein. Im Zentrum sind Elektroden 5 angeordnet, die heb- und senkbar zum Schmelzgut (bspw. Schrott) beabstandet einstellbar sind. Die Energiezuführung erfolgt über Transformatoren 6, die seitlich im Hallengerüst 1 vorgesehen sind. Um die Elektroden 5 sind Beschickungsbehälter 7, 8 usw. angeordnet, die mit Beschickungsgut 9 (bspw. Möller) über einen Hallenkran 10 und einen Beschickungskorb 11 befüllt werden. Aus dem Oberofen 4 werden Abgase des Prozesses in eine Energierückgewinnungsanlage (nicht gezeigt) nach Entstauben und Trennung in verschiedene Abgasleitungen 12 und 13 geführt.

Das über den Hallenkran 10 beförderte Beschickungsgut 9 wird in die Beschickungsbehälter 7 und 8, von denen mehrere über den Ofenquerschnitt verteilt sind, abgelassen. Das Beschickungsgut 9 gelangt nach Öffnen eines Ventils 16 auf dem Beschickungsweg 14 jeweils in ein Beschickungsrohr 17, das nur mit seinem Mundstück 18 im Heißbereich des Ofens, dem Ofenraum 15, arbeitet.

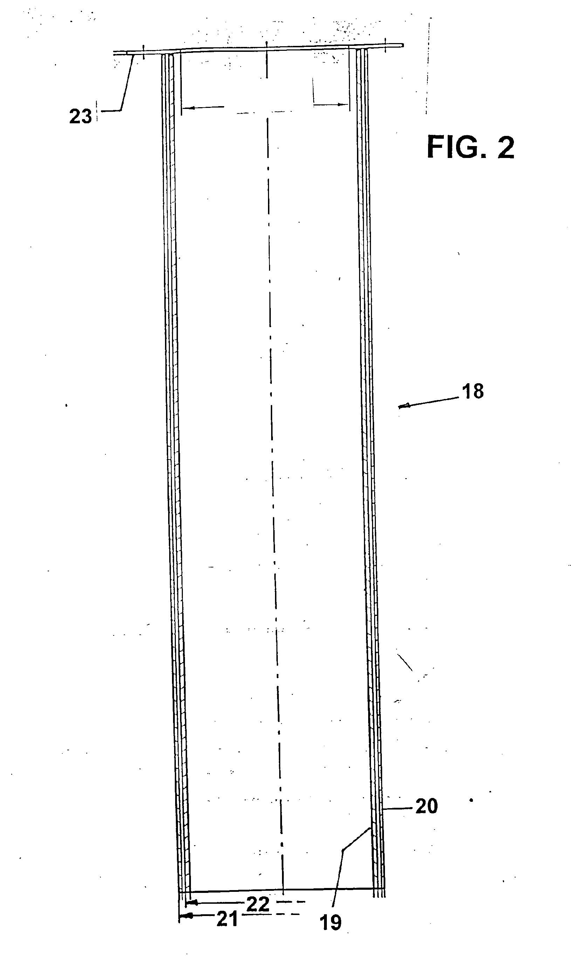

Im Ausführungsbeispiel (Fig. 2) besteht das Beschickungsrohr-Mundstück 18 aus zwei ineinander geschobenen Rohren, einem Führungsinnenrohr 19 und einem Außenschutzrohr 20.

Das Führungsinnenrohr 19 ist aus verschleißfestem Werkstoff (wie bspw. aus Manganhartstahl oder einer Manganlegierung zur Vermeidung der Erhitzung durch Induktionsströme) und das Außenschutzrohr 20 aus hitzebeständigem Werkstoff (wie bspw. aus hochwarmfestem Chromnickelstahl) hergestellt. Es können verschiedene Herstellverfahren für das Führungsinnenrohr 19 und das Außenschutzrohr 20 angewendet werden. Die Rohre liegen im Durchmesserbereich von ca. 540 mm Außendurchmesser 22 für das verschleißfeste Führungsinnenrohr 19 und ca. 576 mm Außendurchmesser 21 für das hitzebeständige Außenschutzrohr 20. Das Führungsinnenrohr 19 und das Außenschutzrohr 20 sind durch einen Flanschring 23 (und über die Länge verteilte Zwischenlagen) zu einem einheitlichen Mundstück 18 zusammengehalten.

### Bezugszeichenliste

- 1: Hallengerüst
- 2: Schmelz- oder Reduktionsofen
- 2a: Elektrolichtbogenofen
- 3: Unterofen
- 4: Oberofen
- 5: Elektroden
- 6: Transformatoren
- 7: Beschickungsbehälter
- 8: Beschickungsbehälter
- 9: Beschickungsgut
- 10: Hallenkran
- 11: Beschickungskorb
- 12: Abgasleitung
- 13: Abgaszweigleitung
- 14: Beschickungsgut
- 15: Ofenraum
- 16: Ventil
- 17: Beschickungsrohr
- 18: Beschickungsrohr-Mundstück
- 19: Führungsinnenrohr
- 20: Außenschutzrohr
- 21: Außendurchmesser d. Außenschutzrohrs 20
- 22: Außendurchmesser des Führungsinnenrohrs 19
- 23: Flanschring mit Zwischenlagen

## Patentansprüche

1. Schmelz- oder Reduktionsofen (2), der offen, halboffen oder geschlossen ausgeführt ist und dem das Beschickungsgut (9) in fester Form mittels Beschickungsrohren (17) bis in den Ofenraum (15) zugeführt wird,
**dadurch gekennzeichnet,**
**dass** die Beschickungsrohre (17) jeweils ein Beschickungsrohr-Mundstück (18) aufweisen, das ungekühlt ist und das aus einem ungekühlten, verschleißfesten Führungsinnenrohr (19) und aus einem ungekühlten konzentrischen, hitzebeständigen Außenschutzrohr (20) gebildet ist, wobei dass verschleissfeste Führungsinnenrohr (19) bei ca. 500-600 mm Aussendurchmesser (22) mit einem Luftspalt in dass hitzebeständige Aussenschutzrohr (20) bei ca. 560-660 mm Aussendurchmesser (21) eingeschoben ist.

2. Schmelz- oder Reduktionsofen nach Anspruch 1,
**dadurch gekennzeichnet,**
**dass** der Werkstoff für das verschleißfeste Führungsinnenrohr (19) aus Manganhartstahl oder einer Manganlegierung zur Vermeidung der Erhitzung durch Induktionsströme besteht.

3. Schmelz- oder Reduktionsofen nach Anspruch 1,
**dadurch gekennzeichnet,**
**dass** der Werkstoff für das hitzebeständige Außenschutzrohr (20) aus hochwarmfestem Chromnickelstahl besteht.

4. Schmelz- oder Reduktionsofen nach Anspruch 1 **dadurch gekennzeichnet,**
**dass** der Luftspalt mit mindestens 10 mm ausgeführt ist.

## Claims

1. Smelting or reduction furnace (2), which is constructed to be open, semi-open or closed and to which the charge material (9) is fed in solid form by means of charging pipes (7) to the furnace interior (15),
**characterised in that**
the charging pipes (17) each have a charging-pipe mouthpiece (18), which is uncooled and which is formed from an uncooled, wear-resistant guiding inner pipe (19) and from an uncooled concentric heat-resistant outer protective pipe (20), wherein the wear-resistant guiding inner pipe (19) with approximately 500-600 millimetres outer diameter (22) is pushed, with an air gap, into the heat-resistant outer protective pipe (20) with approximately 560-660 millimetres outer diameter (21).

2. Smelting or reduction furnace according to claim 1, **characterised in that** the material for the wear-resistant guiding inner pipe (19) consists of manganese hard steel or a manganese alloy for avoidance of heating by induction currents.

3. Smelting or reduction furnace according to claim 1, **characterised in that** the material for the heat-resistant outer protective pipe (20) consists of highly heat-resistant chromium-nickel steel.

4. Smelting or reduction furnace according to claim 1, **characterised in that** the air gap is formed to be at least 10 millimetres.

## Revendications

1. Four de fusion ou de réduction (2) qui est réalisé sous une forme ouverte, semi-ouverte ou fermée et auquel on achemine le produit de chargement (9) sous forme solide au moyen de tubes de chargement (17) jusqu'à l'intérieur du four (15), **caractérisé en ce que** les tubes de chargement (17) présentent respectivement une embouchure de tube de chargement (18) qui n'est pas refroidie et qui est formée par un tube interne de guidage non refroidi (19) résistant à l'abrasion et par un tube de protection externe concentrique non refroidi (20) résistant à la chaleur, dans lequel le tube interne de guidage (19) résistant à l'abrasion possédant un diamètre externe (22) d'environ 500 à 600 mm est inséré avec un entrefer dans le tube de protection externe (20) résistant à la chaleur, possédant un diamètre externe (21) d'environ 560 à 660 mm.

2. Four de fusion ou de réduction selon la revendication 1, **caractérisé en ce que** le matériau pour le tube interne de guidage (19) résistant à l'abrasion est constitué par de l'acier au manganèse ou par un alliage de manganèse pour éviter le réchauffement via des courants d'induction.

3. Four de fusion ou de réduction selon la revendication 1, **caractérisé en ce que** le matériau pour le tube de protection externe (20) résistant à la chaleur est constitué par de l'acier au nickel-chrome très résistant à la chaleur.

4. Four de fusion ou de réduction selon la revendication 1, **caractérisé en ce que** l'entrefer est réalisé avec une valeur minimale de 10 mm.
